# FASCICULE DE BREVET EUROPEEN

(11) **EP 1 472 081 B1**
(45) Date de publication et mention de la délivrance du brevet: **01.04.2015**
(21) Numéro de dépôt: 03718849.7
(22) Date de dépôt: 07.02.2003
(51) Int. Cl.: A61C 13/00, C04B 35/111, C04B 35/447, C04B 35/486, C04B 35/488, C04B 35/632, C04B 35/634, G03F 7/00, G03F 7/004, G03F 7/027, B32B 18/00

(54) **PROCEDE ET COMPOSITION POUR LA FABRICATION DE PIECES CERAMIQUES PAR STEREO-LITHOPHOTOGRAPHIE ET APPLICATION AU DOMAINE DENTAIRE**
VERFAHREN UND ZUSAMMENSETZUNG FÜR DIE HERSTELLUNG VON KERAMISCHEN FORMTEILEN MIT STEREOLITHOGRAPHIE UND ANWENDUNG IN DENTALBEREICH
METHOD AND COMPOSITION FOR MAKING CERAMIC PARTS BY STEREOLITHOPHOTOGRAPHY AND USE IN DENTISTRY

(30) Priorité: 08.02.2002 FR 0201599; 05.02.2003 FR 0301312
(43) Date de publication de la demande: 03.11.2004
(73) Titulaire: Centre de Transfert de Technologies Ceramiques (C.T.T.C.), 87069 Limoges (FR)
(72) Inventeur: CHAPUT, Christophe, F-87410 Le Palais de Vienne (FR); CHARTIER, Thierry, F-87220 Feytiat (FR); DOREAU, Franck, F-87130 Masleon (FR)
(74) Mandataire: Regimbeau
(86) Numéro de dépôt international: PCT/FR2003/000391
(87) Numéro de publication internationale: WO 2003/066326

(56) Documents cités:
- EP-A- 0 140 140
- EP-A- 0 602 252
- FR-A- 2 788 268
- US-A- 5 496 682
- US-A- 5 977 199
- US-A- 6 117 612
- HINCZEWSKI C ET AL: "STEREOLITHOGRAPHY FOR THE FABRICATION OF CERAMIC THREE-DIMENSIONAL PARTS" RAPID PROTOTYPING JOURNAL, MCB UNIVERSITY PRESS, BRADFORD, GB, vol. 4, no. 3, 1998, pages 104-111, XP008019237 ISSN: 1355-2546
- CHAPUT C ET AL: "STEREOLITHOGRAPHY FOR CERAMIC PART MANUFACTURING" CERAMIC MATERIALS AND COMPONENTS FOR ENGINES, XX, XX, 19 juin 2001 (2001-06-19), pages 353-357, XP008019265

## Description

L'invention concerne la fabrication de pièces céramiques par stéréo-photolithographie (prototypage rapide).

La fabrication d'une pièce céramique par stéréolithographie consiste à déposer sur un support une couche mince d'une composition contenant en mélange une poudre céramique, une résine photopolymérisable, un photoinitiateur, un dispersant et des adjuvants éventuels, à polymériser cette couche dans une ou des zones choisies par l'action d'un rayonnement approprié, à déposer une nouvelle couche sur la couche ainsi traitée et à recommencer les opérations jusqu'à ce que l'ensemble des parties polymérisées constitue la pièce désirée à l'état cru, à éliminer les parties non polymérisées, à éliminer le constituant organique de la pièce crue notamment par décomposition thermique (déliantage) et à fritter la pièce.

On met en oeuvre le procédé au moyen d'une composition liquide ou pâteuse.

Dans le cas d'une composition liquide, le support est immergé dans un bain de la composition en sorte qu'il ne soit recouvert que de ladite couche mince et il est abaissé progressivement dans le bain au fur et à mesure de la formation des couches.

Un exemple typique est décrit dans la publication US 5 496 682 où il est indiqué que le liquide doit avoir une viscosité inférieure à 3 pascal-seconde, de préférence inférieure à 1 pascal-seconde.

Dans le cas d'une composition pâteuse, une quantité appropriée de composition est déposée sur le support pour y être étalée par raclage et former la couche désirée, et l'opération est répétée couche après couche.

Un exemple typique est décrit dans la publication FR 2 788 268.

Typiquement, la composition pâteuse présente une viscosité de plusieurs centaines à plusieurs milliers de pascal-seconde.

Les pièces obtenues par stéréolithographie à partir d'une composition liquide sont molles et doivent subir un post traitement UV (brevet US 5 496 682) pour les durcir et éviter leur déformation pendant la cuisson alors que les pièces obtenues par stéréolithographie à partir d'une composition pâteuse ont un taux de polymérisation total ce qui induit une architecture très rigide puisque les grains ne peuvent se réorganiser ; il en résulte qu'il existe de très fortes contraintes à l'intérieur de la pièce lors du déliantage, les chaînes de polymère se dégradent et la libération brutale de ces contraintes peut provoquer des fissures lors du frittage, notamment lorsque la pièce a une épaisseur de paroi de plusieurs millimètres.

La présente invention vise à résoudre ce problème de fissuration qui se pose dans le cas de la stéréolithographie à partir d'une solution pâteuse.

Dans la pratique, ces contraintes internes existant dans la pièce crue sont relaxées lors du déliantage et génèrent une fissuration de la pièce lors du frittage, notamment lorsque la pièce a une épaisseur de paroi de plusieurs millimètres.

De façon surprenante, on a constaté que ce problème pouvait être résolu en incorporant à la pâte un agent plastifiant en quantité de 20 à 50% en volume par rapport à la quantité de résine polymérisable et que l'on pouvait ainsi obtenir sans fissuration des pièces ayant jusqu'à une épaisseur de paroi de plus de 1 centimètre.

On a déjà proposé (publication US 5 496 682) d'incorporer un plastifiant dans une composition pour la fabrication d'une pièce céramique par prototypage rapide dans mais il s'agissait d'un procédé de stéréolithographie appliqué à une composition liquide et le plastifiant n'avait d'autre fonction que de réduire la viscosité de la composition en sorte que la composition reste liquide.

Cette utilisation ne pouvait donc suggérer l'utilisation d'un plastifiant dans une composition qui doit rester pâteuse, et qui plus est pour résoudre un problème qui ne se pose que dans le cas d'une composition pâteuse.

Selon la présente invention, l'addition de plastifiant dans la composition pâteuse est avantageusement conjuguée avec l'utilisation d'une quantité de poudre de zircone stabilisée en quantité comprise entre 49 et 55% du volume total de la composition pour maintenir la viscosité de la composition à une valeur d'au moins 10 000 pascal-seconde à un gradient de vitesse d'écoulement de 0,1 sec⁻¹ en sorte que la pâte soit « autoporteuse », c'est-à-dire ne s'écoule pas d'elle-même et que les parties non polymérisées d'une couche puissent supporter la couche suivante.

Selon l'invention, le plastifiant élimine ou minimise les contraintes internes lors de la photopolymérisation et permet de relaxer rapidement les éventuelles contraintes résiduelles pouvant apparaître après l'exposition au rayonnement, dues à la cinétique de polymérisation, ceci grâce à une diminution des interactions entre les chaînes qui favorise leur mobilité.

Le mot «poudre céramique» désigne une ou plusieurs poudres céramiques.

Le mot «résine» désigne une ou plusieurs résines.

Dans des modes de réalisation préférées, on met en oeuvre une ou plusieurs des caractéristiques suivantes :
- on utilise une résine photopolymérisable trifonctionnelle ;
- on utilise une résine acrylate, comme résine photopolymérisable ;
- on utilise une résine acrylate du groupe constitué par :
   · Diméthacrylate de Bisphénol A di-éthoxylé (par exemple Diacryl 101 de AKZO),
   · Diacrylate de 1,6 hexanediol (par exemple HDDA de UCB) ;
- on utilise une composition pâteuse dont l'agent plastifiant est un ou plusieurs agents du groupe constitué par la famille des glycols (ex : le polyéthylène glycol), la famille desphtalates (ex : le dibutylphtalate), le glycérol.

L'initiation de la polymérisation des acrylates est obtenue par l'absorption de lumière ultraviolette par des substances génératrices de radicaux libres. Les amorceurs des acrylates sont de type cationique et leur choix est guidé principalement par la longueur d'onde de la source lumineuse qu'ils doivent absorber soit 350-360mm dans le cas de l'ultraviolet.

Deux photoiniateurs particulièrement efficaces sont les suivantes :
- 2,2'-diméthoxy-2-phénylacétophéhone (par exemple, Irgacure 651 de CIBA)
- 2-hydroxy-2-méthyl-1-phényl-propane-1-one (par exemple, Darocure 1173 de CIBA)

Le dispersant utilisé doit être compatible avec la résine photopolymérisable dans laquelle il est dissout et être efficace avec la poudre céramique à disperser. Les polyélectrolytes utilisés dans d'autres procédés céramiques sont peu adaptés car ils se dissocient difficilement dans ce type de milieu. Des dispersants avec des mécanismes de stabilisation stérique ou électrostérique sont préférés.

Les esters phosphoriques se sont révélés être de bons dispersants.

Tout agent plastifiant compatible avec les résines peut être envisagé, notamment le polyéthylène glycol et le glycérol dans le cas des résines acrylates. Le dibutylphtalate s'avère moins efficace.

### Exemples :

On prépare des pâtes comprenant (% en volume du volume total) :

| | Pâte A | Pâte B |
|---|---|---|
| Céramique (1) | 62 | 59 |
| Résine (2) | 29,6 | 28,4 |
| Photoinitiateur (3) | 0,1 | 1 |
| Dispersant (4) | 4,7 | 4,5 |
| Plastifiant (5) | 6,3 | 7,1 |

La viscosité de la pâte à 0,1 sec⁻¹ est 14200 Pa.s (pâte A) et 13200 Pa.s (pâte B).
(1) alumine dans la pâte A et hydroxyapatitexyhapatite dans la pâte B,
(2) Diacryl 101 de AKZO (pâte A) et CN 503 de CRAY VALLEY (pâte B),
(3) Irgacure 651 de CIBA,
(4) Beycostat A 259 de CECA (pâte A) et C213 (pâte B),
(5) PEG 300 de Merck

Avec la pâte A, on fabrique par prototypage rapide en 188 couches de 100 microns, une pièce en forme de grille de dimensions hors-tout 230 x 230 x 13,8mm que l'on soumet à un traitement thermique (déliantage) jusqu'à 600°C avec un palier de 2h à 600°C puis à un frittage jusqu'à 1700°C avec un palier de 1h30 à 1700°C.

La pièce obtenue présente une résistance à la rupture en flexion de 396 Mpa.

Avec la pâte B, on fabrique par prototypage rapide en 230 couches de 100 microns, une pièce de dimensions hors-tout 72 x 37 x 23mm que l'on soumet à un traitement thermique (déliantage) jusqu'à 600°C avec un palier de 2h à 600°C puis à un frittage jusqu'à 1400° C avec un palier de 1h30 à 1400°C.

La pièce obtenue présente une rupture en flexion de 102 Mpa.

A titre comparatif, on a fabriqué une pièce céramique par la technique du bain en utilisant une composition liquide et dont le taux de charge céramique est seulement de 46,4% en volume :
- céramique : 151 cm³
- résine : 91 cm³
- Photoinitiateur : 5 cm³
- dispersant : 39 cm³
- agent de mouillage: 7,2 cm³
- plastifiant : 32 cm³

En dépit du faible taux de charge céramique, la préparation est difficile et nécessite l'utilisation d'un solvant. La polymérisation est très faible. La réalisation d'une pièce simple avec cette composition n'est possible que si elle est de petite taille et sans détail géométrique (barrette, cube, cylindre). La pièce crue est très molle et se déforme facilement. Apparition de quelque dilamination. Après déliantage et frittage, une barrette de 0,5 x 0,5 x 2 cm est complètement fissurée.

Parmi les applications de l'invention, il y a lieu de noter en particulier l'application au domaine dentaire.

A l'heure actuelle, la majorité des bridges dentaires est constituée d'une chape métallique recouverte ou non d'une porcelaine. Cette dernière, constituée de différentes couches céramiques successivement cuites à haute température, permet de donner la teinte désirée à la dent ou à l'ensemble des dents (bridge) à implanter pour l'intégrer parfaitement à la dentition du patient.

Les structures dentaires sont soumises à de fortes contraintes mécaniques lors de leur usage, et la partie métallique permet de satisfaire ces exigences. Mais le principal inconvénient réside dans le fait que plusieurs couches céramiques sont nécessaires pour :
- cacher l'aspect métallique de la chape et donner la bonne translucidité et coloration du système ;
- accorder les coefficients de dilatation dans l'objectif d'obtenir un système stable, non microfissuré.

La longévité de tels systèmes est fonction de la qualité de la liaison entre le métal et la première couche céramique. L'interface entre ces deux matériaux est générateur de défauts, tels que les fissures.

Dans l'objectif d'accroître la longévité des structures dentaires, de faciliter la coloration des dents, tout en limitant le nombre de couches d'apports généralement en porcelaine, la bague métallique peut être remplacée par une bague céramique.

Le procédé et la composition de la présente invention permettent d'obtenir des pièces dentaires céramiques de faible dimension, mais avec des côtes très précises, adaptées à chaque patient.

On utilise de préférence dans cette application une poudre de zircone stabilisée, par exemple une zircone stabilisée à 3% molaire en yttrine (Y₂O₃). Cette stabilisation permet de conserver une microstructure tétragonale et d'éviter toute transformation de phase provoquant la fissuration des pièces denses.

La zircone stabilisée possède de bonnes propriétés mécaniques (1 200MPa en flexion 3 points (données fournisseur)), notamment lorsque les grains constituant la poudre sont très fins (< à 0, 5µm).

La réalisation de la pâte céramique doit être maîtrisée pour contrôler les phénomènes de rhéologie et de réactivité. L'utilisation de poudre de zircone fine permet de charger la suspension avec des taux compris entre 49 et 55%. La viscosité à gradient de vitesse d'écoulement de 0, 1 est de l'ordre de 10 000 à 15 000Pa.s.

La fabrication de structures dentaires nécessite la réalisation de pièces céramiques possédant de bonnes tolérances. Pour ce faire, de fines couches sont constituées au cours de la fabrication. Leur épaisseur est de 25 µm, ce qui permet d'obtenir un bel état de surface et une plus grande précision. Ces faibles épaisseurs sont nécessaires pour conserver des vitesses de polymérisation raisonnables. En effet, la faible réactivité des pâtes à base de zircone est un facteur limitant au niveau de la quantité des pièces à fabriquer. La diminution des épaisseurs des couches permet de diminuer la durée de polymérisation.

Le travail avec de si faibles épaisseurs induit plus de contraintes lors de la mise en couche et des défauts peuvent être générés, comme des arrachements locaux, des manques de pâte céramique par endroit,... Des produits organiques tels que les agents de rhéologie permettent d'étaler la pâte sur de faibles épaisseurs et d'obtenir une mise en couche correcte. Il est également possible d'améliorer l'état de surface de chaque couche par ajouts d'agents mouillants ou d'anti-mousse, produits qui ont la particularité de dégazer la pâte et d'accroître son étalement lors de la mise en couche. Ces composés permettent d'éliminer les défauts à chaque couche.

La réactivité de la pâte céramique est un paramètre important. Outre la résine, il est possible de jouer sur cette caractéristique en utilisant un photoinitiateur adapté ou un mélange de photoinitiateurs. L'objectif est alors de pouvoir polymériser des épaisseurs suffisantes pour fabriquer la pièce souhaitée.

Avantageusement, la composition comprend des agents de rhéologie pour que les couches présentent des états de surface sans défauts susceptibles de créer des microporosités.

Un exemple de pâte céramique est donnée ci-après (% en volume du volume total) :
- poudre céramique : ZrO₂ (49%)
- résine : CN503 de Cray Valley (30, 6%)
- Photoinitiateurs:Irgacure 369 de CIBA (0, 07%) Iragacure 819 de CIBA (0, 06%) Iragacure 907 de CIBA (0, 06%)
- dispersant : Beycostat C213 de CECA (5, 5%)
- plastifiant : Dibutylphtalate de Acros Organics (4,6%)
- agents de rhéologie : Rad 2100 de Tego (2,8%) Rad 2500 de Tego (2,9%) Glide 450 de Tego (2,9%)
- anti-mousse : Foamex N de Tego (1, 5%)

La technologie de prototypage rapide adaptée aux structures dentaires permet de fabriquer « sur mesure » une chape ou un bridge nécessaire pour un patient donné. Ces structures peuvent être de simples chapes unitaires ou un assemblage de chapes (bridges) dont la forme peut être droite ou incurvée.

Une image scannée de la partie à réparer est traitée par un logiciel adapté (CAO) qui permet de redimensionner la pièce céramique à réaliser et de la découper en tranche successive de 25 µm.

La pièce est ensuite construite physiquement par prototypage rapide avec la pâte précédemment décrite.

Avec cette pâte, on fabrique par prototypage rapide des bridges de 40x6x12 mm³ que l'on soumet après nettoyage de la pâte non polymérisée, à un traitement thermique (déliantage) jusqu'à 550°C avec un palier de 2 heures, puis à un frittage jusqu'à 1400°C voire 1550°C avec un palier de 2 heures, selon la zircone utilisée.

La pièce obtenue présente une résistance à la rupture en flexion de l'ordre de 1000MPa.

Dans d'autres modes de réalisation, la zircone est dopée à l'alumine pour augmenter les propriétés mécaniques.

L'invention n'est pas limitée à ces exemples.

## Revendications

1. Procédé pour fabriquer une pièce en matière céramique par une méthode de prototypage rapide, qui comprend les opérations consistant à déposer sur un support une couche mince d'une composition pâteuse contenant en mélange une poudre de zircone stabilisée, une résine photopolymérisable, un photoinitiateur, un dispersant et des adjuvants éventuels, à polymériser localement cette couche dans une ou des zones choisies par l'action d'un rayonnement approprié, à déposer une nouvelle couche sur la couche ainsi traitée et à recommencer les opérations jusqu'à ce que l'ensemble des parties polymérisées constitue la pièce désirée à l'état cru, à éliminer les parties non polymérisées, à éliminer par décomposition thermique (déliantage) le constituant organique de la pièce crue et à fritter cette pièce, **caractérisé en ce qu'**on incorpore à la composition un agent plastifiant en quantité de 20 à 50% en volume par rapport à la quantité de résine polymérisable afin d'éliminer ou de minimiser les contraintes générées dans la pièce lors de la polymérisation pour éviter la fissuration de la pièce pendant le frittage et **en ce qu'**on utilise une composition contenant une poudre de zircone stabilisée en quantité comprisse entre 49 et 55% par rapport au volume total de la composition pour que la composition ait une viscosité d'au moins 10.000 Pa.s à un gradient de vitesse d'écoulement de 0,1 sec⁻¹, en sorte que la pâte soit autoporteuse, c'est-à-dire ne s'écoule pas d'elle-même et que les parties non polymérisées d'une couche puissent supporter la couche suivante.

2. Composition pâteuse pour fabriquer une pièce en matière céramique par un procédé selon la revendication 1 qui comprend une poudre de matière de zircone stabilisée, une résine photopolymérisable, un photoinitiateur, un dispersant et des adjuvants éventuels, **caractérisé en ce que** la composition comprend un agent plastifiant en quantité de 20 à 50% en volume par rapport au volume de fa résine pour éliminer ou minimiser les contraintes générées dans la pièce lors de la polymérisation pour éviter la fissuration de la pièce pendant le frittage, et **en ce que** la proportion de poudre de zircone stabilisée est comprise entre 49 et 55% par rapport au volume total de la composition pour que pour que la composition ait une viscosité d'au moins 10.000 Pa.s à un gradient de vitesse d'écoulement de 0,1 sec⁻¹, en sorte que la pâte soit autoporteuse, c'est-à-dire ne s'écoule pas d'elle-même et que les parties non polymérisées d'une couche puissent supporter la couche suivante.

3. Composition selon la revendication 2 qui a un module élastique supérieur au module visqueux.

4. Composition selon l'une des revendications 2 ou 3 dont l'agent plastifiant est un ou plusieurs agents du groupe constitué par, la famille des glycols, la famille des phtalates et le glycérol.

5. Composition selon l'une des revendications 2 à 4, qui comporte comme résine photopolymérisable une résine trifonctionnelle.

6. Composition selon l'une des revendications 1 à 4 et qui comprend comme, résine photopolymérisable une résine acrytate.

7. Composition selon la revendication 6 dont la résine photopolymérisable est une résine du groupe constitué par les résines suivantes :
- Diméthacrylate de Bisphénol A di-éthoxylé
- Diacrylate de 1,6 hexanediol.

8. Composition selon l'une des revendications précédentes dont la zircone est dopée à l'alumine.

9. Application d'un procédé selon la revendication 1 et d'une composition selon l'une des revendications 2 à 8 à la fabrication de chapes, de bridges et autres structures dentaires.

10. Application selon la revendication 9 dans laquelle le procédé est mis en oeuvre par couches d'épaisseur au plus égale à 25 micromètres.

## Patentansprüche

1. Verfahren zum Herstellen eines Teils aus Keramikmaterial durch ein Rapid Prototyping-Verfahren, das Schritte umfasst, die darin bestehen, auf einen Träger eine dünne Schicht aus einer pastösen Zusammensetzung aufzutragen, die als Gemisch ein Pulver aus stabilisiertem Zirkonoxid, ein photopolymerisierbares Harz, einen Fotoinitiator, ein Dispergiermittel und eventuelle Zusatzmittel enthält, bereichsweise diese Schicht in einem oder in mehreren ausgewählten Bereichen durch die Wirkung einer geeigneten Strahlung zu polymerisieren, eine neue Schicht auf die so behandelte Schicht aufzutragen und die Schritte zu wiederholen, bis die gesamten polymerisierbaren Anteile das gewünschte Teil im Grünzustand bilden, die nicht polymerisierten Anteile zu beseitigen, den organischen Bestandteil des Grünteils durch thermische Zersetzung (Entbinderung) zu beseitigen und dieses Teil zu sintern, **dadurch gekennzeichnet, dass** der Zusammensetzung ein Weichmacher in einer Menge von 20 bis 50 Vol.-% in Bezug auf die Menge an polymerisierbarem Harz beigemengt wird, um die bei der Polymerisierung in dem Teil erzeugten Spannungen zu beseitigen bzw. zu minimieren, um Rissbildung des Teils während der Sinterung zu vermeiden, und dass eine Zusammensetzung mit einem Pulver aus stabilisiertem Zirkonoxid in einer Menge zwischen 49 und 55 % in Bezug auf das Gesamtvolumen der Zusammensetzung verwendet wird, damit die Zusammensetzung eine Viskosität von mindestens 10.000 Pa.s mit einem Fließgeschwindigkeitsgradienten von 0,1 s⁻¹ hat, so dass die Paste selbsttragend ist, d. h. nicht von selbst fließt, und dass die nicht polymerisierten Anteile einer Schicht die nachfolgende Schicht tragen können.

2. Pastöse Zusammensetzung zum Herstellen eines Teils aus Keramikmaterial durch ein Verfahren nach Anspruch 1, das ein Pulver aus stabilisiertem Zirkonoxid, ein photopolymerisierbares Harz, einen Fotoinitiator, ein Dispergiermittel und eventuelle Zusatzmittel enthält, **dadurch gekennzeichnet, dass** die Zusammensetzung einen Weichmacher in einer Menge von 20 bis 50 Vol.-% in Bezug auf das Harz enthält, um die bei der Polymerisierung in dem Teil erzeugten Spannungen zu beseitigen bzw. zu minimieren, um Rissbildung des Teils während der Sinterung zu vermeiden, und dass das Verhältnis des Pulvers aus stabilisiertem Zirkonoxid zwischen 49 und 55 % in Bezug auf das Gesamtvolumen der Zusammensetzung liegt, damit die Zuaammensetzung eine Viskosität von mindestens 10.000 Pa.s mit einem Fließgeschwindigkeitsgradienten von 0,1 s⁻¹ hat, so dass die Paste selbsttragend ist, d. h. nicht von selbst fließt, und dass die nicht polymerisierten Anteile einer Schicht die nachfolgende Schicht tragen können.

3. Zusammensetzung nach Anspruch 2, die einen Elastizitätsmodul höher als der Viskositätsmodul aufweist.

4. Zusammensetzung nach einem der Ansprüche 2 oder 3, wobei der Weichmacher ein oder mehrere Mittel aus der Gruppe bestehend aus der Familie der Glykole, der Familie der Phthalate und Glycerin ist.

5. Zusammensetzung nach einem der Ansprüche 2 bis 4, die als photopolymerisierbares Harz ein trifunktionales Harz aufweist.

6. Zusammensetzung nach einem der Ansprüche 1 bis 4, die als photopolymerisierbares Harz ein Acrylat-Harz aufweist.

7. Zusammensetzung nach Anspruch 6, wobei das photopolymerisierbare Harz ein Harz aus der Gruppe bestehend aus den nachfolgenden Harzen ist:
- Bisphenol A Diethoxy Dimethacrylat
- 1,6 Hexandiol-Diacrylat.

8. Zusammensetzung nach einem der vorangehenden Ansprüche, wobei das Zirkonoxid mit Aluminiumoxid dotiert ist.

9. Anwendung eines Verfahrens nach Anspruch 1 und einer Zusammensetzung nach einem der Ansprüche 2 bis 8 zum Herstellen von Kronen, Brücken und anderen Dentalstrukturen.

10. Anwendung nach Anspruch 9, wobei das Verfahren in Schichten mit einer Dicke von höchstens gleich 25 µm durchgeführt wird.

## Claims

1. Method for making a ceramic piece by a rapid prototyping procedure, which comprises operations consisting of depositing a thin layer of a paste composition containing a mixture of a stabilised zirconia powder, a photopolymerisable resin, a photoinitiator, a dispersant and optional adjuvants on a support, polymerising this layer locally in one or several selected zones by the action of suitable radiation, depositing a new layer on the layer thus treated, and recommencing the operations until all of the polymerised parts constitute the desired piece in the unprocessed state, removing the unpolymerised parts, removing the organic constituent of the unprocessed piece by thermal decomposition (debinding), and sintering this piece, **characterised in that** a plasticising agent is incorporated into the composition in a quantity of 20 to 50% by volume relative to the quantity of polymerisable resin in order to eliminate or minimise the stresses generated in the piece during polymerisation so as to avoid cracking of the piece during sintering and **in that** a composition is used containing a stabilised zirconia powder in a quantity between 49 and 55% relative to the total volume of the composition to ensure that the composition has a viscosity of at least 10,000 Pa.s at a flow velocity gradient of 0.1 sec⁻¹, such that the paste is self-supporting, that is to say does not flow by itself, and that the unpolymerised parts of one layer can support the following layer.

2. Paste composition for making a ceramic piece using a method according to claim 1, which comprises a stabilised zirconia powder, a photopolymerisable resin, a photoinitiator, a dispersant and optional adjuvants, **characterised in that** the composition comprises a plasticising agent in a quantity of 20 to 50% by volume relative to the volume of the resin to eliminate or minimise the stresses generated in the piece during polymerisation, so as to avoid cracking of the piece during sintering, and **in that** the proportion of stabilised zirconia powder is between 49 and 55% relative to the total volume of the composition to ensure that the composition has a viscosity of at least 10,000 Pa.s at a flow velocity gradient of 0.1 sec⁻¹, such that the paste is self-supporting, that is to say does not flow by itself, and that the unpolymerised parts of one layer can support the following layer.

3. Composition according to claim 2, which has an elastic modulus greater than the viscous modulus.

4. Composition according to any of claims 2 or 3, wherein the plasticising agent is one or a plurality of agents from the group consisting of the family of glycols, the family of phthalates, and glycerol.

5. Composition according to any of claims 2 to 4, which comprises, as photopolymerisable resin, a trifunctional resin.

6. Composition according to any of claims 1 to 4, and which comprises, as photopolymerisable resin, an acrylate resin.

7. Composition according to claim 6, wherein the photopolymerisable resin is a resin from the group consisting of the following resins:
- Di-ethoxylated bisphenol A dimethacrylate
- 1,6-hexanediol diacrylate.

8. Composition according to any of the above claims wherein the zirconia is doped with alumina.

9. Application of a method according to claim 1 and a composition according to any of claims 2 to 8 for producing caps, bridges and other dental structures.

10. Application according to claim 9, wherein the method is implemented with layers of a thickness of not more than 25 micrometres.
